# EUROPEAN PATENT APPLICATION

(11) **EP 2 735 229 A1**
(43) Date of publication of application: **28.05.2014**
(21) Application number: 12464026.9
(22) Date of filing: 29.11.2012
(51) Int. Cl.: A01N 31/08, A01N 43/16, A01N 65/22, A01N 65/44, A01N 25/34, A01N 25/04, A01P 7/02, A01P 3/00, A23K 1/18

(54) **Product for treatment of bee families and process for its application**

(30) Priority: 27.11.2012 RO 201200889
(71) Applicant: SC Sunshine Business Serv SRL, 137005 Aninoasa, Jud. Dâmbovita (RO)
(72) Inventor: Oancea, Florin, 062082 Bucharest (RO); Rosu, Laurentiu, 137005 Aninoasa Jud. Dâmbovita (RO); Stefanescu, Bogdan-Mihail, 060153 Bucharest (RO)

(57) **Abstract**

Invention refer to a product dozed for a single application on a bee family, and to a process for its application. The product consist of a package, with a volume between 10 and 40 cm³, formed by thermosealing from a hydrosoluble film, which contain fructo-oligosaccharides, corn starch, polyvinyl alcohol, lecithin, glycerol, magnesium stearate, water, on which are introduced 8...32 g of a hydrophobic composition, done from sunflower oil, thymol / thyme oil, or mint oil, lemongrass oil, thyme oil, and additives, maltol and lecithin..

The process of application involve to make in the same time a spraying on the bee hive body, with the emulsion formed from the product acting predominantly by evaporation, and a spraying on the bee frames and on the bees, with the emulsion which stimulate the bees, diluted in a ratio 1:1 with bee feeding syrup, or concomitant application, by spraying on the bee hives of the emulsion acting by evaporation, and of a substitute feeding, with bee feeding syrup on which was diluted, in a ratio 1:20, the emulsion which stimulate the bees.

## Description

The present invention refer to a product based on essential oils and prebiotic fructo-oligosaccharides, dozed for a single application on a bee family, and to a process for application of this product on apiculture, for protection of bees against diseases and parasites, by activation of the defense systems of bees and by limitation of the development of populations of bee pathogens and pests, and for stimulation of the feeding activity of bees.

There are known various products, based on essential oils and others natural products, and intended to be used as treatment of bee families. These products represent an optimal solution to the compromise between the necessity for protection of bees against various pathogens agents and pests and the requirement to keep the honey quality at a contamination level appropriate for human consumption. The essential oil, and also the natural products which are used in combination with these, extracted from plant or synthesized to be identical with those existing in nature, are generally recognized to be safe for human consumption, because are not generating dangerous residues, have limited side effects on bee and on others non-target organisms, are bio-degradable and sure for the environment and select very slowly resistant populations of pathogens agents and/or pests (Blenau et al., 2012, Apidologie, 43:334-347).

Patent EP0869714 (B1) describe a composition, with controlled release, on which the essential oils (and/or organic acids) are include in a hydrogel obtained by cross-linking of the thickening agents which are forming gels, like polyacrylic acid, carboxymethylcellulose, polyvinyl alcohol, hydrophilic polysaccharides, etc. From this composition the essential oils are evaporating slowly, keeping a constant vapor concentration on hive, active for pathogen agents and pests and sure for bees. This controlled released composition made from cross-linked hydrogels present several disadvantages, related to the partial separation on time of the water phase, and it is limited for the application exclusively by evaporation.

Patent Application W003055315 (A1) refers to the use of micro-encapsulated essential oils in a coacervates form. The micro-encapsulation is done in aqueous solutions, with the use of emulsifiers, exemplified by polisorbat 20 (Tween 20), obtained by sorbitol dehydration and treatment of dehydration products with lauric acid and ethylene oxide, and the polymeric coating of coacervates, presented on the examples of invention embodiment, is formed by coagulation and cross-linking of the proteins. Agar is preferred on the exemplified embodiments of invention as thickening agent. Composition include between 10 and 30% essential oils, between 1 and 10% coacervated polymer and between 0.2 and 5% non-ionic surfactant. The product do not express on time the aqueous phase, but it is limited to the application by evaporation, the coacervates microcapsules being inappropriate for administration on bee feed.

Patent Application US 20070026765 A1 presents a composition for combatting the parasite mites of melliferous bees, on which the essential oils are included together with a natural surfactant, preferred lecithin, in order to be emulsified on an aqueous solution of (inverted) sugar syrup, fructose - glucose syrup from corn, or honey, usually applied as bee feed. Composition is applied both as supplement of bee feeding and also for spraying the frames with bees, for stimulation of the activity of mutual cleaning behavior of these ("grooming)", but are not claimed process for application on which the essential oils should act preponderantly on vapor phase, to eliminate also the mites which parasite the sealed brood.

Patent Application GB2482900, published also as W02012022931 (A2), W02012022931 (A3), disclose compositions which are administrated to the bee families by powdering, for combatting the parasite mites. These compositions contain 91.5%-99% carnauba wax, up till 8% biological active ingredient, which is preferably an essential oil, and especially thymol / thyme oil, and 0.5% flowing agent, preferably hydrophilic precipitated silicas. Such formulation of essential oils present a low water activity and a reduced risk for microbial degradation, could be pre-dosed for application on one separate hive, acts predominantly for the stimulation of the mutual cleaning behavior ("grooming"), but cannot be applied as nutritive supplement / on the bee feed and are difficult to be done compatibles with some hydrophilic active ingredients, which could have an activity complementary to those of essential oils.

An example of hydrophilic active ingredients with an activity complementary to essential oils are the fructo-oligosaccharides, which have a prebiotic activity, promoting the development of probiotic bacteria (Sangeetha et al., 2005, Trends Food Sci. Tech., 16:442-457). These probiotic bacteria are beneficial for the health of bees and of bees families (Vasque et al., 2012, PLoS One, 7:e33188), preventing infection with *Paenibacillus larvae,* bacteria which produce American foulbrood (Mudronova et al., 2011, J. Api. Res., 50:323-324), and stimulating the bee immune defense response (Evans and Lopez, 2004, J. Econ. Entomol., 97:752-756). Fructo-oligosaccharides are presented on Patent Application KR20100125738 (A) as a prebiotic in a synbiotic combination with probiotic bacteria from lactobacillus groups, but till now were never associated with the essential oils in order to be applied as a treatment for bee, thus in human medicine was emphasized a synergism of activity of probiotic bacteria and essential oils against harmful microorganisms (please see, as example, the review Shipradeep et al., 2012, Gastroent. Res. Pract., 2012: ID457150), and fructo-oligosaccharides are a largely recognized prebiotic, which promote probiotic bacteria development.

The concentration of fructo-oligosaccharides recovered from honey, and which sustain the development of beneficial probiotic bacteria, is of max 58 mg/kg (0,058 mg/g, Mei et al., 2010, Int. Food Res. J., 17:557-561). Higher concentrations of fructo-oligosaccharides, especially from those with 3 or more residues of fructose, represent an indicator of honey adulteration with fructose syrup obtained from inulin (Ruiz-Matute et al., 2010, J. Food Compos. Anal. 23: 273-276), thus the fructo-oligosaccharides must be dozed with precision per bee families, in order to assure the development of microbiocenosis beneficial to bees, with antagonism toward the microorganisms pathogens for bees and with an action of bee immunity stimulation, without generating potential problems related to suspicions of honey adulteration.

The technical problem that the invention intent to solve is to obtain a product which ensure treatments on bee families with amounts of fructo-oligosaccharides and essential oils precisely dosed, for reciprocal enhancement of their actions: combating honey bee pathogens and pests; promoting of probiotic bacteria development into the hive; stimulation of honey bee feeding activity.

The solution to the technical problem consist in a product for treatment of bee families which is made from a package, with a volume between 10 and 40 cm³, formed by thermosealing of a hydrosoluble film, which contain 37.2 ... 39.6 parts of fructo-oligosaccharides with less than 10 residues of hexoses in molecule, 33.4 parts of corn starch with thermic resistance and capacity to form films, 14.5 parts of thermoplastic polyvinyl alcohol, 3.1...3.3 parts of lecithin with a hydrophilic - lipophilic balance HLB of 4, 2.85..3.15 parts of glycerol, 1.45...1.55 parts of magnesium stearate, water till 100 parts, on which are introduced 8...32 g of hydrophobic composition, done from 30 parts thymol natural identic, or equivalent of white thyme, *Thymus zygis,* oil, with at least 45% thymol, or 15 parts lemongrass, *Cymbopogon flexuosus,* oil, 15 parts of mint, *Mentha piperita,* oil, 5 parts of white thyme, *Thymus zygis,* oil, with at least 45% thymol, 2 parts of modified lecithin, with a hydrophilic - lipophilic balance HLB higher than 8, and 1 part maltol, the difference till 100 parts being sunflower vegetable oil.

By dissolution on water before the application the components of the hydrosoluble package and those from the hydrophobic liquid are homogenizing by agitation and behave practically as a unitary composition, forming stable emulsions, including here the case of further emulsification with syrups usually used as bee feed, administrated by spraying on bee frames or used as bee feed.

It is a derived object of the technical solution to disclose a composition of water soluble package which should be enough resistant for easy handling, being in the same time fast soluble in water. The authors find that the addition of fructo-oligosaccharides to a mixture of starch, polyvinyl alcohol, glycerol, lecithin and magnesium stearate, determine the formation of a product with a good thermoplastic behavior, which present good mechanical properties and which are not sticking to the hand epidermis, and which fast dissolve in cold water.

It is another derived object of the technical solution to disclose a hydrophobic composition, included into the hydrosoluble packaging, based on essential oils, preferable thymol / thyme oil or mint oil, lemongrass oil and thyme oil, dissolved in vegetable oil, preferably sunflower oil, on which are added maltol, compound with anti-oxidant properties, which, on the same time, is a fragrance enhancer and have an synergizing effect on the anti-microbial activity, and lecithin, as a natural emulsifier.

It is another object of the present invention to describe a process wherein this pre-dosed product is emulsified on water, after dissolution of the water soluble package and homogenization of the disperse system, the resulted emulsion being applied according to the desired action, by spraying, on bee hive body, for further evaporation on hive, and/or on bee hive frames and on the bees, for stimulation of the mutual cleaning behavior in the bee families, and/or by administration as a nutritive supplement on the bee feed.

The process for product application according to the invention is consisting of the following steps: emulsification of the pre-dosed product, package and content, in 100 ml of water, under agitation for forming of a stable emulsion, followed by dilution with (inverted) sugar solution or glucose-fructose syrup from corn, in a ratio of 1:1 in the case of emulsion intended to be used for spraying on the bee frames and bees, or in a ratio of 1:20 of that used as supplement on bee feed, application in the same time, as a part of fall treatments before wintering, by spraying on the bee hive body of the emulsion formed from the product with high content of essential oil acting predominantly by evaporation, and by spraying the bee frame and the bee, of the emulsion formed from the product with essential oils which stimulate the bee, diluted in ratio 1:1 with feed for bee, for stimulation of mutual cleaning behavior of infested bee, or concomitant application, during the periods of beginning of foraging or during the period of lack of nectar, by spraying on the bee hives of the emulsion formed from the product with a high content of essential oils which act by evaporation, and as stimulant and prebiotic supplement on bee feed, of the emulsion which stimulate the bees, diluted in ratio 1:20 in the bee feed.

According, in a first preferred embodiment, the invention involves:
- Obtaining of films from hydrosoluble material, which contain 37.2 .. 39.6 parts of fructo-oligosaccharides with less than 10 residues of hexoses in molecule, 33.4 parts of corn starch with thermic resistance and capacity to form films, 14.5 parts of thermoplastic polyvinyl alcohol, 3.1...3.3 parts of lecithin with a hydrophilic
- lipophilic balance HLB of 4, 2.85...3.15 parts of glycerol, 1.45...1.55 parts of magnesium stearate, water till 100 parts, with a thickness of 0.25..0.8 mm, by mixing the components, their granulation and film forming by extrusion;
- Forming. by thermosealing, from the resulted hydrosoluble film, of packages with a volume between 10...40 cm³, and introduction of 8...32 g of hydrophobic composition, comprising sunflower vegetable oil, thymol / thyme oil, or respectively mint oil, lemongrass oil, thyme oil, and additives, maltol and lecithin.

In another preferred embodiment of invention the product designed for a predominant action through evaporation is composed from a hydrosoluble package of 40 cm³, formed from a hydrosoluble film with a thickness of 0.25 mm and weighting approx. 0.85 g, which contain 32 g of solution 30% thymol, 2% modified lecithin, with a hydrophilic - lipophilic balance HLB higher than 8, and 1 % maltol, on sunflower oil, and the product, designed to be used by spraying on bee frames, or as nutritive supplement for bees, is composed from a hydrosoluble package of 10 cm³, formed from a hydrosoluble film with a thickness of 0.8 mm and weighting approx. 0.8 g, which contain 8 g of solution 15% lemongrass oil, 15% mint oil, 5% thyme oil, 2% modified lecithin, with a hydrophilic - lipophilic balance HLB higher than 8, and 1% maltol, on sunflower oil.

In another embodiment of the invention the application process involve to perform, on the same time, a spraying on the hive body with an emulsion acting preponderantly by evaporation, and a spraying, on the bee frames and on the bees, with an emulsion which stimulate the mutual cleaning behavior of infested bee, or a concomitant application of a spraying on the bee hive, with an emulsion acting by evaporation, and of a substitute feeding of honey bees with bee feed in a form of a syrup on which was diluted, in a ratio 1:20, the emulsion which stimulate the bee.

Emulsions acting preponderantly by evaporation, used in the above describe process, are done by dissolution of the pre-dosed product designed to act predominantly by evaporation, package and content, in 100 ml of water, under agitation, to form a stable emulsion, and the application of the emulsion is done with a hand held sprayer, preferable on the bottom part of the inner cover, over the upper bee frames, to promote the vapor action also on the brood frames.

Emulsions designed to stimulate the mutual cleaning behavior of infested bee are done by dissolution of the pre-dosed product designed to stimulate the bees, package and content, in 100 ml of water, under agitation, to form a stable emulsion, and dilution of the emulsion, in ratio 1:1 with (inverted) sugar syrup or glucose - fructose syrup, used as bee feed, and the application of emulsion is done with a hand held sprayer, preferable after the exposure of the bee frames, after raising from the base part of bee hive body / deep supper of the upper body(ies) / shallow super.

Emulsions of product with a content of essential oils which stimulate bees, used in the above described process, are done by dissolution of the pre-dosed product, package and content designed to stimulate bees, in 100 ml of water, under agitation to form a stable emulsions, and dilution, in ratio of 1:20 with bee feed as syrup, and feeding of bee, preferably by depositing the syrup on a jar feeder installed near the hole of the inner cover, in order to balance the microflora from the bees' digestive system and to activate their immune system, under the action of probiotic bacteria, promoted by the prebiotics fructo-oligosaccharides, and to stimulate the bee behavior for collecting pollen and nectar.

The concomitant spraying, on the bee hive body and on the bee frames and over the bees, according to the process described by the invention, is performed during the fall treatment, to assure a efficient disinfestation before the wintering, through of complementary action of emulsion acting by evaporation and of that stimulating the mutual cleaning behavior.

Application in the same time, of a spraying over the bee hive body with emulsion which is acting by evaporation, and of a substitute feeding with bee feed, which include the emulsion stimulating for bees, according to the process described by the invention, is done on the periods of beginning of the foraging activity or during the temporary lack of nectar, to sustain the bee families, to protect them against some diseases and pests and for stimulation of harvesting.

The invention presents the following advantages:
- Increased stability on shelf of the product, due to the low activity of water in product, both in the hydrosoluble package and on hydrophobic component;
- Stability of the emulsion formed after dissolution in water, before the application, due the emulsifying activity of the surfactants, and especially of lecithin, and of emulsion stabilization by the polyvinyl alcohol and starch;
- Mechanical resistance and easily handling of the hydrosoluble packaging, due to the plasticizer effect of oligosaccharides, which allow a thermo-plastic processing with the reduction of water content under 10% on the final package;
- High solubility of package on cold water, due to the high solubility of fructo-oligosaccharides and wetting effect of lecithin;
- Possibility to apply according to the needs, by spraying the bee hive and/or spraying the bee frames and bees and/or by adding on bee feed;
- Stimulation of the foraging activity of bee, due to maltol, which is also a fragrance enhancer, and of some of the ingredients from mint and lemongrass oils, geraniol, nerol, citral A and citral B, present also in the pheromones of Nasonov glands, used by bees as forage marks;
- Limit the population of parasite mites on the sealed brood after the application by evaporation;
- Stimulate the mutual cleaning behavior of infested bee, after the application by spraying on the bees;
- Promote the development of the probiotic bacteria, from the beehive and from the digestive system of bee, with equilibration of the microbiocenosis and activation by these beneficial bacteria of the bee immunity;
- Inhibits the development of the pathogen agents, especially *Ascosphaera apis,* under the action of the microbiostatic components from the essential oils and antagonism of the probiotic bacteria promoted by fructo-oligosaccharides;
- Homogenize the evaporated components applied on the bottom side of inner cover, due to ventilating action done by the bee which are flying to the jar feeder installed on the inner cover;
- Assure an efficient disinfection before wintering, by complementary action of the emulsion which is acting by evaporation with that which stimulates the mutual cleaning behavior of infested bee.

In the followings the invention will be describe by presenting some examples of its realization.

*Example 1.* In a mixing vessel are mixed in geometrical proportion 1.5 g of magnesium stearate (Parteck^{®} Lub MST, Merck, Darmstadt, Germany), 38.8 g fructo-oligosaccharides with less than 10 hexoses residues in molecule (Orafti^{®}P95, Orafti-Beneo, Tienen, Belgium), 33.4 g of corn starch with thermal resistance and capacity of film forming (Clinton 444, Archer Daniels Midland, Decatur, IL, US), 14.5 g thermoplastic polyvinyl alcohol (^{®}Mowieflex LP TC 251, Kurary Europe, Hattersheim am Main, Germany). After complete homogenization it is added 35 g aqueous suspension on which were homogenized 3.5 g glycerol (85%, Merck, Darmstadt, Germany) and 3.2 g lecithin with a hydrophilic-lipophilic balance HLB of 4 (Yelikin^{®}, Archer Daniels Midland, Decatur, IL, US). It is obtained on the beginning a semi-fluid mass, which, by further mixing, becomes pasty and, on the end, is forming a fine granulated powder, humid, but presenting free flowing characteristics. The powder is granulated on a Plasti-Corder Lab Station (Brabender, Duisburg, Germany) and then is extruded on a twin screws extruder (Brabender, Duisburg, Germany), at a screw ratio L /D = 28 L, on a plastifying temperature in three zones, of 110°C, 115°C and 120°C, at a pressure of 14.5 - 15 bars, and at a rotation speed of 50-60 rpm. The obtained blown film, of 0.25 mm, is inflated by blowing air of 70°C through the interior of a die with a dimension of 100 mm, and it is used to make, by thermosealing, pouches with a volume of 40 cm³. The resulted material have a water content, determined by thermogravimetric analysis, of less than 10%, its composition being: 37.2...39.6 parts of fructo-oligosaccharides with less than 10 hexoses residues in molecule, 33.4 parts of corn starch with thermal resistance and capacity of film forming, 14.5 part of thermoplastic polyvinyl alcohol, 3.1..3.3 parts of lecithin with a hydrophilic-lipophilic balance HLB of 4, 2.85 ... 3.15 parts of glycerol, 1.45 ...1.55 parts of magnesium stearate, water till 100 parts.

On the inside of the hydrosoluble package of 40 cm³, formed by thermosealing, are introduced 32 g of oily solution, which contain 30% thymol, 2% modified lecithin, with a hydrophilic-lipophilic balance HLB higher than 8 (Thermolec^{®} WFC, Archer Daniels Midland) and 1% maltol (Sigma-Aldrich, St. Louis, Mo, US), dissolved in sunflower oil. Thymol used could be natural identic or equivalent in thyme oil with at least 45% thymol (white thyme, *Thymus zygis,* oil, according ISO 14715 : 2010). The package is closed by thermosealing and it is repackaged on a poly-ethylene bag, to avoid accidental contact with water.

The resulted pre-dosed product is intended to be used for forming an emulsion which is applied by spraying on the body of the beehive, preferably on the bottom side of the inner-cover from the top of the bee frames, to promote the action of the vapors also on the frames with brood. The slowly evaporated thymol, from the adherent drops on the wood surface of inner-cover, is exerting its action on the pathogen agents and bee pests, especially on mites.

*Example 2.* It is done a film of hydrosoluble material in the similar manner like in Example 1, the difference being in the thickness of the blown film, which is 0.8 mm. From this film is made by thermosealing a package of 10 cm³, which weight around 0.8 g. On this hydrosoluble package are introduced 8 g of solution 15% lemongrass oil, 15% mint oil, 5% thyme oil, 2% modified lecithin, with a hydrophilic-lipophilic balance HLB higher than 8 (Thermolec^{®} WFC, Archer Daniels Midland) and 1% maltol (Sigma-Aldrich, St. Louis, Mo, US), dissolved in sunflower oil.

Lemongrass *(Cymbopogon flexuosus)* oil used is essential oil according to ISO 4718:2004, mint *(Mentha piperita)* oil used is essential oil according to ISO 856:1981, and the thyme oil is essential oil with at least 45% thymol, (white thyme, *Thymus zygis,* oil, according to ISO 14715 : 2010).

The pre-dosed product is intended to stimulate the bee families. For application, the pre-dosed product is introduced into 100 ml of water and, after 1 min, is vigorously agitated to form an emulsion. The resulted emulsion is mixed with (inverted) sugar syrup or with fructose - glucose syrup from corn, in proportion 1 : 1, if it is used by spraying for stimulation of the mutual cleaning behavior of infested bee, or in proportion of 1 : 20, if it is applied as feed supplement for bees.

*Example 3.* On the beginning of foraging, or during the periods of lack of foraging, it is applied a spraying, on the bottom side of the inner cover of the bee frames, with an emulsion acting by evaporation, and a substitute feeding with the bee feed syrup, applied on the feeding jar from the upper side of the inner cover, on which was diluted in ratio 1: 20 the emulsion stimulating the bees. Bee attraction, in the area of evaporation of the emulsion applied on the bottom side of the inner cover, promote the exposure of the bees and of the parasites form the bees to the action of the essential oil vapors and homogenize the vapors into the hive, under the action of air currents related to the flight of bee into the hive.

The emulsion acting by evaporation is obtained according to Example 1, by introduction of the hydrosoluble packaging of 40 cm³, which contain 32 g of solution 30% thymol, 2% modified lecithin and 1% maltol in 100 ml water. The supplementation of bee feed is done according to Example 2, by introduction of the pre-dosed product, which contain in a hydrosoluble packaging of 10 cm³, 8 g of hydrophobic composition with 15% lemongrass oil, 15% mint oil, 5% thyme oil, 2% modified lecithin and 1% maltol, dissolved in sunflower oil, in 100 ml of water, and dilution in proportion of 1:20 with syrup used as bee feed.

The process of application was experimented in the spring of year 2012, in a period with lack of foraging, between the ends of foraging on black locust and before the beginning of foraging on sunflower, on the end of May. The experiment was done in only one apiary, belonging to one of the authors, and included the following experimental treatments: V₁ - not-treated control; V₂ - treatment with a standard product based on thymol applied by evaporation (Apiguard^{®}, 2 trays with 50 g gels, 12.5 g thymol per tray, above the frames, under inner cover); V₃ - treatment with a standard product based on thymol applied by evaporation (Apiguard^{®}, 2 trays with 50 g gels, 12.5 g thymol per tray, above the frame, under inner cover) and with 2.180 kg of inverted sugar syrup (Apiinvert^{®}, Agrana, Vienna, Austria), on which were homogenized 109 g of emulsion containing 1.2 g of lemongrass, 1.2 g of mint oil, 0.4 g of thyme oil, 16 mg of lecithin and 8 mg of maltol; V₄ - treatment according to example 3 of this invention, 133 g of emulsion which is acting by evaporation on the bottom side of the wood inner cover, 109 g of emulsion from product for bee stimulation diluted into 2.180 kg of inverted sugar syrup (Apiinvert^{®}, Agrana). Each experimental treatment included 4 repetitions, each repetition consisting of 3 bee families, each bee family having 15,000 bees; randomization of the 4 treatments in 4 repetitions was done in a Latin square.

Before the application of the treatments were taken 300 bees from three bee frames, on each was determined the degree of *Varroa* infestation by using the method proposed by De Jong et al., 1982, Apidologie 13:297-303. For diagnostic of the presence of *Varroa* on brood were inspected, by opening, 100 combs with workers brood from each bee family. Based on the results from the infestation determination, the bee families were separated on three categories of infestation with *Varroa,* low, medium and high, and each repetition included one bee family from each category of infestation. The monitoring of the effect of products during the experimental period was done by using a cardboard sheet placed on the anti-*Varroa* bottom board, on which were registered the death mites. Monitoring of the evolution of ascospherosis was done by daily numbering of the death larvae (chalkbrood, symptom of infection with *Ascosphaera apis),* removed at the beehive entrance. On the end of the experimentation period was done once again the estimation of the degree of infestation on the bee hives used in experiment, by taken-out 300 bees per bee family and 100 larvae. Efficacy of each treatment was estimated by calculation of an index of reduction = (initial index - final index) /initial index x 100. After 4 weeks of experimentation the bee hives were moved near a sunflower field (cv. Pro 229, Procera seeds, Fundulea, Romania), where were maintained for four weeks, on each week being monitored the accumulation of honey and bee biomass, by weighting. The data obtained during the experiment were processed by analysis of variance (Statistica 10, StatSoft, Tulsa, OK, US).

The results were presented in tab.1 from bellow. These results demonstrate a good efficacy of the product done according to invention, applied according to invention, concomitantly as spraying of the emulsion which is acting by evaporation and as supplement in the bee feed of the emulsion which stimulate the bees.

**Tab. 1. Efficacy of the product according to invention, applied concomitantly as spraying of the emulsion which is acting by evaporation and as supplement in the bee feed of the emulsion which stimulate the bees*.**

| Treatment | Efficacy anti-Varroa (%) | Death mites (average number per week) | Chalkbrood (average number per week) | Production of honey, monthly average** |
|---|---|---|---|---|
| V₁ not-treated control | - | 212d | 752g | 12.52k |
| V₂ Apiguard^{®}, 2 trays with 50 g gels, 12.5 g thymol per tray | 63.5a | 764e | 268h | 17.341 |
| V₃ Apiguard^{®}, 2 trays with 50 g gels, 12.5 g thymol per tray and 2.180 kg of inverted sugar syrup + 109 g of emulsion containing 1.2 g of lemongrass, 1.2 g of mint oil, 0.4 g of thyme oil, 16 mg of lecithin and 8 mg of maltol | 77.5b | 882ef | 185i | 20.27m |
| V₄ - treatment according to example 3 of this invention | 87.4c | 1038f | 112j | 23.06n |

| | | | | |
|---|---|---|---|---|
| *values followed by the same letter do not differ significantly for P>0,05 ** monthly average per treatment of one month of foraging on sunflower, which followed 28 days from the treatment application | | | | |

By concomitant application according to the invention, of 133 g of emulsion which is acting by evaporation on the bottom side of the wood inner cover and 109 g of emulsion from product for bee stimulation diluted into 2.180 kg of inverted sugar syrup, it was done a reduction of the degree of infestation with *Varroa* higher than that realized by the commercial product applied only by evaporation. The concomitant application of the commercial product as gel form, designed for the action by evaporation, and of a substitute feeding in the feeding jar from the upper side of the inner cover, lead to a statistically significant increase of the efficacy of *Varroa destructor* control and of a significant increase of the efficacy of the control of *Ascosphaera apis,* fungus which produce the chalkbrood. The components of the hydrosoluble packaging, and especially the fructo-oligosaccharides, have a significant contribution to the significant increase of the activity of protecting bee towards the attack of *Ascosphaera apis* and *Varroa destructor.*

*Example 4.* In the frame of the treatments on the bee families during the fall, as preparation for wintering, it is applied a spraying, on the bottom side of the inner cover from the top of the bee frames, with an emulsion acting especially by evaporation, and a spraying, in the same time, on the bee frames and on bees, with an emulsion which stimulate the mutual cleaning behavior of infested bee, diluted in ratio 1:1, with glucose - fructose syrup from corn or with inverted sugar syrup.

The emulsion acting by evaporation is obtained according to Example 1, by introduction of the hydrosoluble packaging of 40 cm³, which contain 32 g of solution 30% thymol, 2 % modified lecithin and 1% maltol in 100 ml water. The emulsion which stimulate the mutual cleaning behavior of infested bee is done according to Example 2, by introduction of the pre-dosed product, which contain in a hydrosoluble packaging of 10 cm³, 8 g of hydrophobic composition with 15% lemongrass oil, 15% mint oil, 5% thyme oil, 2% modified lecithin and 1% maltol, dissolved in sunflower oil, in 100 ml of water, and dilution in proportion of 1:1 with glucose - fructose syrup from corn or with inverted sugar syrup.

The aim of the combined treatment is to achieve an association of the protection actions on the bee families against the attack of *Varroa destructor,* by combining the -cidal effect of the thymol vapors, with the effect of disinfestation by mutual cleaning behavior of infested bee ("grooming"), stimulated by spraying with syrup which represent bee feeding, mixed with essential oils and fructo-oligosaccharides. The behavior of mutual hygienic cleaning stimulates the beehive ventilation, and promotes the thymol evaporation and the action of thymol vapors.

The application process was experimented in the autumn of year 2012, at the end of September, in a period when the average temperature during the day varied between 16.8 and 23.5°C, being over the threshold of 15°C recommended for treatments on which thymol is applied for subsequent evaporation. The experiment was done in only one apiary, belonging to one of the authors, and included the following experimental treatments: V₁ - not-treated control; V₂ - treatment with a standard product based on thymol applied by evaporation (Apiguard^{®}, 2 trays with 50 g gels, 12.5 g thymol per tray, above the frames, under inner cover); V₃ - treatment with a standard product based on thymol applied by evaporation (Apiguard^{®}, 2 trays with 50 g gels, 12.5 g thymol per tray, bellow the frame, under inner cover) and with 218 g of emulsion obtained from 109 g of glucose - fructose syrup (Isosugar™, Tate and Lyle, London, UK), on which were homogenized 109 g of emulsion containing 1.2 g of lemongrass oil, 1.2 g of mint oil, 0.4 g of thyme oil, 16 mg of lecithin and 8 mg of maltol, applied by spraying of the bee frames and of bee with a hand held sprayer, on the bee frames exposed by partial raising of the upper body(ies) / shallow super; V₄ - treatment according to example 4 of this invention, 133 g of emulsion which is acting by evaporation on the bottom side of the wood inner cover, 109 g of emulsion from product for bee stimulation, diluted into 109 g of glucose - fructose syrup (Isosugar™, Tate and Lyle), applied by spraying of the bee frames and of bee with a hand held sprayer, on the bee frames exposed by partial raising of the upper body(ies) / shallow super. Each experimental treatment included four repetitions, each repetition consisting of 3 bee families, each bee family having 15,000 bees; randomization of the 4 treatments in 4 repetitions was done in a Latin square.

Before the application of the treatments were taken 300 bees from three bee frames, on each was determined the degree of infestation with *Varroa* by using the method proposed by De Jong et al., 1982, Apidologie 13:297-303. For diagnostic of the presence of *Varroa* on brood were inspected, by opening, 100 combs with workers brood from each bee family. The bee families were separated on three category of infestation with *Varroa,* low, medium and high, based on the results from the infestation determination, and each repetition included one bee family from each category of infestation. The monitoring of the effect of products during the experiment period was done by using a cardboard sheet placed on the *anti-Varroa* bottom board, on which were registered the death mites. On the end of the experimentation period was done once again the estimation of the degree of infestation on the bee hives used in experiment, by taken-out 300 bees per bee family and 100 larvae. Efficacy of each treatment was estimated by calculation of an index of reduction = (initial index - final index) / initial index x 100. The data obtained during the experiment were processed by analysis of variance (Statistica 10, StatSoft, Tulsa, OK, US).

The results were presented in tab. 2 from bellow. These results demonstrate a good efficacy of the product done according to invention, applied according to invention, concomitantly as spraying of the emulsion which is acting by evaporation on the bee hive, and, on bee frames and bees, of the emulsion acting by stimulation of the bees. By concomitant application according to the invention, of 133 g emulsion acting by evaporation on the bottom of the wood inner cover, and 109 g of emulsion from the product for bee stimulation, diluted with 109 g of glucose - fructose syrup from corn (Isosugar™, Tate and Lyle), applied by spraying of the bee frames and of bees, with a hand held sprayer, on the bee frames exposed by partial raising of the upper body(ies) / shallow super, lead to a reduction of the infestation degree with *Varroa,* which is over that achieved by using the commercial product applied only by evaporation.

**Tab. 2. Efficacy of the product according to invention, applied concomitantly as spraying of the emulsion which is acting by evaporation and on the bee frames and bees of the emulsion which acting by stimulation of the bees*.**

| Treatment | Efficacy anti-Varroa (%) | Death mites (average number per week) |
|---|---|---|
| V₁ not-treated control | - | 187d |
| V₂ Apiguard^{®}, 2 trays with 50 g gels, 12.5 g thymol per tray | 60.7a | 537e |
| V₃ Apiguard^{®}, 2 trays with 50 g gels, 12.5 g thymol per tray and 109 g of glucose - fructose syrup + 109 g of emulsion containing 1.2 g of lemongrass, 1.2 g of mint oil, 0.4 g of thyme oil, 16 mg of lecithin and 8 mg of maltol | 72.4b | 642f |
| V₄ - treatment according to example 3 of this invention | 82.4c | 727g |

| | | |
|---|---|---|
| *values followed by the same letter do not differ significantly for P>0,05 ** monthly average per treatment of one month of foraging on sunflower, which followed 28 days from the treatment application | | |

Concomitant application of the commercial product, gel form, designed to act by evaporation, and of a spraying of bee frames and bees with an emulsion of essentials oil in syrup glucose - fructose, lead to an significant increase of the efficacy of *Varroa destructor* mite control. The components of the hydrosoluble packages, especially the fructo-oligosaccharides, contributed to a significant increase of the action of honey bee protection against the attack of *Varroa destructor.*

## Claims

1. Product for treatment of bee families **characterized in that** is made from a package, with a volume between 10 and 40 cm³, formed by thermosealing from a hydrosoluble film, which contain 37.2 ... 39.6 parts of fructo-oligosaccharides with less than 10 residues of hexoses in molecule, 33.4 parts of corn starch with thermic resistance and capacity to form films, 14.5 parts of thermoplastic polyvinyl alcohol, 3.1...3.3 parts of lecithin with a hydrophilic - lipophilic balance HLB of 4, 2.85...3.15 parts of glycerol, 1.45...1.55 parts of magnesium stearate, water till 100 parts, on which are introduced 8...32 g of hydrophobic composition, done from 30 parts thymol, natural identic or equivalent of white thyme, *Thymus zygis,* oil, with at least 45% thymol, or 15 parts lemongrass, *Cymbopogon flexuosus,* oil, 15 parts of mint, *Mentha piperita,* oil, 5 parts of white thyme, *Thymus zygis,* oil, with at least 45% thymol, 2 parts of modified lecithin, with a hydrophilic - lipophilic balance HLB of 8, and 1 part maltol, the difference till 100 parts being sunflower vegetable oil.

2. Product according to claim 1, designed for a predominant action through evaporation, **characterized in that** include, on a hydrosoluble package of 40 cm³, formed from a hydrosoluble film with a thickness of 0.25 mm and weighting approx. 0.85 g, 32 g of hydrophobic composition, made from 30 parts thymol natural identic or equivalent white thyme, *Thymus zygis,* oil, with at least 45% thymol, 2 parts modified lecithin, with a hydrophilic - lipophilic balance HLB higher than 8, and 1 parts maltol, the balance till 100 parts being vegetable sunflower oil, and forms stable emulsion on water, after dissolution in water of the hydrosoluble film, emulsification of the hydrophobic component and stabilization of the emulsion, inclusive under the stabilization action of some of the ingredients of the package.

3. Product according to claim 1, designed primarily for bee stimulation, **characterized in that** include, on a hydrosoluble package of 10 cm³, formed from a hydrosoluble film with a thickness of 0.8 mm and weighting approx. 0.8 g, 8 g of hydrophobic composition, made from 15 parts lemongrass, *Cymbopogon flexuosus,* oil, 15 parts of mint, *Mentha piperita,* oil, 5 parts of white thyme, *Thymus zygis,* oil, 2 parts of modified lecithin, with a hydrophilic - lipophilic balance HLB of 8, and 1 part maltol, the difference till 100 parts being sunflower vegetable oil, and forms stable emulsion with water and with sugar syrups used for bee feeding.

4. Process of application of the product done according to claim 1, for the treatment of bee families, **characterized in that** consist of the following steps: emulsification of the pre-dosed product, package and content, in 100 ml of water, under agitation for forming of a stable emulsion, followed by dilution with (inverted) sugar solution or glucose-fructose syrup from corn, in a ratio of 1:1 in the case of emulsion intended to be used for stimulation of the mutual cleaning behavior of infested bees, after spraying on the bee frames and bees, or in ratio of 1:20 of that used as supplement on bee feed, application in the same time, by spraying on the bee hive body of the emulsion formed from the product acting predominantly by vaporization, and by spraying the bee frames and the bees, of the emulsion formed from the product which stimulate mutual cleaning behavior of infested bees, or concomitant application, by spraying on the bee hives of the emulsion formed from the product which act by evaporation, and of a substitute feeding with bee feed as syrup form on which was diluted in ratio 1:20 the emulsion which stimulate the bees.

5. Process according to claim 4, **characterized in that** the step of spraying on the beehive body with the emulsion acting predominantly be evaporation, is applied with a hand held spraying pump, preferably on the bottom side of the inner cover of the bee frames, to promote the action of vapors also on the brood frames.

6. Process according to claim 4, **characterized in that** the step of concomitant spraying, on the beehive body and on the bee frames and bees, is applied during the fall treatments, to assure an efficient disinfestation before wintering, by complementary action of the emulsion acting by evaporation with that stimulating the mutual cleaning behavior of infested bees.

7. Process according to claim 4, **characterized in that** the step of application on the same time, of a spraying on the beehive body with emulsion acting by evaporation, and of a substitute feeding with bee feed which include the stimulating emulsion for bee, is done during the periods of beginning of foraging or of temporary lack of nectar, to sustain the bee families, to protect them against diseases and pests and for stimulation of the harvest.
